# FASCICULE DE BREVET EUROPEEN

(11) **EP 4 378 832 B1**
(45) Date de publication et mention de la délivrance du brevet: **22.01.2025**
(21) Numéro de dépôt: 23209967.1
(22) Date de dépôt: 15.11.2023
(51) Int. Cl.: B64D 11/06

(54) **SIEGE DE COCKPIT D'AERONEF A AFFICHAGE INTEGRE A L' ARRIERE DU DOSSIER ET COCKPIT MUNI D'UN TEL SIEGE**
COCKPITSITZ FÜR FLUGZEUGE MIT INTEGRIERTEM DISPLAY AN DER RÜCKSEITE DER RÜCKENLEHNE UND COCKPIT MIT EINEM SOLCHEN SITZ
AIRCRAFT COCKPIT SEAT WITH INTEGRATED DISPLAY AT THE REAR OF THE BACKREST AND COCKPIT EQUIPPED WITH SUCH A SEAT

(30) Priorité: 29.11.2022 FR 2212514
(43) Date de publication de la demande: 05.06.2024
(73) Titulaire: Airbus (S.A.S.), 31700 Blagnac (FR)
(72) Inventeur: ZANEBONI, Jason, TOULOUSE (FR)
(74) Mandataire: Airbus-OPS SAS

(56) Documents cités:
- US-A1- 2009 008 969
- US-A1- 2011 266 392
- US-A1- 2012 139 303
- US-A1- 2013 160 768
- US-A1- 2019 185 165
- US-B2- 8 276 845

## Description

La présente invention concerne les cockpits d'aéronef et plus particulièrement les sièges de cockpit d'aéronef.

De manière classique, un cockpit d'aéronef comprend des commandes dites de pilotage nécessaires au pilotage de l'aéronef réparties sur une planche de bord, s'étendant transversalement à l'aéronef. Des commandes dites de confort pour permettre à un pilote de contrôler des paramètres de confort dans le cockpit telles que par exemple la température peuvent se trouver également sur la planche de bord ou sur le pylône central. Aussi lorsque le pilote pénètre dans le cockpit, ces commandes de confort ne sont pas facilement et rapidement accessibles du fait d'être incorporées à la planche de bord ou pylône central avec les commandes de pilotage. US 8 276 845 82 concerne un poste de pilotage d'avion, dans lequel des réglages liés à l'ergonomie du poste de pilotage, tels que ceux des sièges occupés par les pilotes pendant le vol, des palonniers de pilotage, ainsi que d'autres éléments de confort et de sécurité, sont effectués. US 2011/266392 A1 décrit un système de confort pour un passager d'un avion. US 2012/139303 A1 divulgue un ensemble d'affichage comprenant un écran couplé au dossier d'un siège passager. US 2009/008969 A1 divulgue un dispositif de support à monter contre l'arrière du dossier d'un siège de cockpit. US 2019/185165 A1 divulgue un siège de pilote avec une échelle télescopique intégrée dans le dossier. US 2013/160768 A1 divulgue un siège de pilote avec une source d'oxygène intégrée dans le dossier.

La présente invention vise à proposer une nouvelle interface de commande de ces paramètres de confort.

A cet effet, la présente invention concerne un siège de cockpit comprenant un dossier présentant une face arrière et une assise, caractérisé en ce que le dossier présente un équipement intégré à la face arrière du dossier et comportant au moins une commande de paramètre de confort et une zone d'affichage.

Ainsi les commandes de paramètre de confort sont facilement visibles et accessibles en entrant dans le cockpit et l'entrant peut directement adapter son environnement selon ses souhaits.

L'invention prévoit au moins l'une des caractéristiques optionnelles suivantes, prises isolément ou en combinaison.

L'équipement comprend une partie amovible comportant au moins une partie desdites commandes, au moins un processeur et au moins une zone de stockage.

L'équipement comprend un écran tactile, des commandes étant actionnées par simple appui sur ledit écran.

Le dossier comprend un appui-tête et l'équipement est intégré à l'appui-tête au moins en partie.

Le dossier comprend une coque, la face arrière du dossier correspondant alors à la face arrière de la coque, et l'équipement étant intégré à la partie supérieure de ladite coque sur une face inclinée par rapport à l'horizontale.

La présente invention concerne également un cockpit muni d'un siège présentant l'une ou plusieurs des caractéristiques présentées précédemment, caractérisé en ce qu'il comprend une planche de bord comportant des commandes de pilotage ségréguées de commandes de confort accessibles depuis l'équipement intégré à la face arrière d'au moins un siège de cockpit.

La présente invention concerne aussi un procédé de contrôle de paramètres de confort d'un cockpit, caractérisé en ce qu'au moins une partie du contrôle est réalisée à partir de commandes de confort d'un équipement intégré à une face arrière d'au moins un siège dudit cockpit, l'équipement comportant une zone d'affichage.

L'invention prévoit au moins l'une des caractéristiques optionnelles suivantes, prises isolément ou en combinaison.

Le procédé comprend le contrôle de la zone d'affichage pour assurer un éclairage temporaire, alternatif ou complémentaire du cockpit.

Certaines commandes de confort sont accessibles depuis l'équipement ainsi qu'à distance de celui-ci dans le cockpit en dehors de la planche de bord.

L'équipement active des commandes de confort associées à des paramètres de contrôle déterminés suivant l'utilisateur identifié par des moyens de reconnaissance de l'équipement.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue en perspective d'un aéronef muni d'au moins un siège selon la présente invention ;
[Fig. 2] est une vue en perspective d'un cockpit pourvu de deux sièges selon la présente l'invention vu de l'intérieur d'un aéronef et de l'arrière du cockpit ;
[Fig. 3] est une vue schématique de côté d'un cockpit muni d'un siège selon la présente invention ;
[Fig. 4] est une vue partielle en perspective d'un siège vu de l'arrière selon la forme de réalisation schématisée représentée sur la figure 3 ;
[Fig. 5] est la même vue que celle de la figure 4 mais dans laquelle une partie d'un équipement permettant le réglage des paramètres de confort est amovible ;
[Fig. 6] est une vue en perspective d'une autre forme de réalisation que celle des figures 3 à 5 d'un siège vu de l'arrière selon la présente invention.

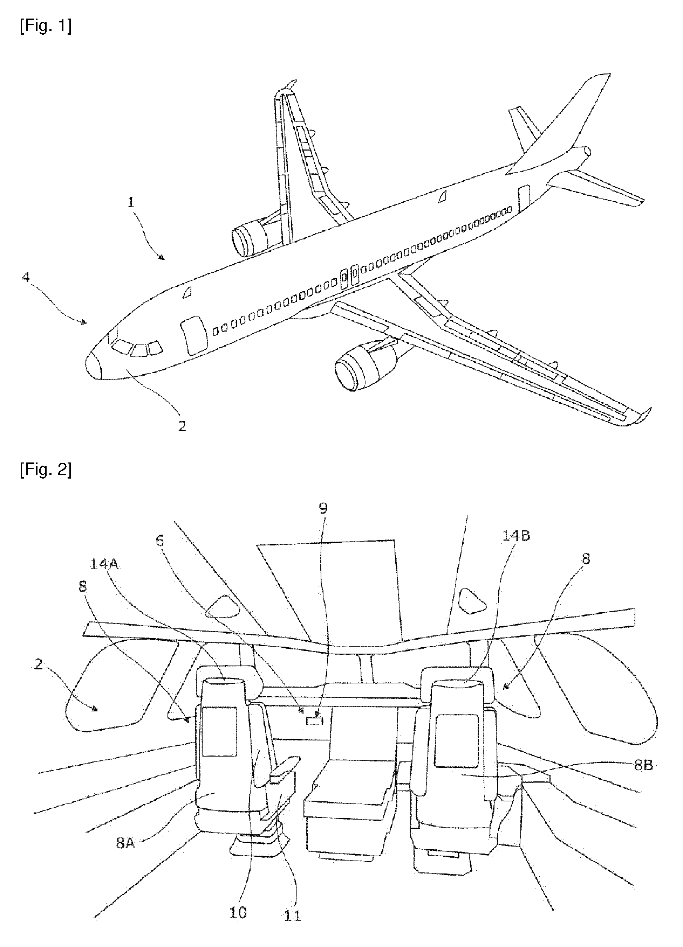

La figure 1 représente un aéronef 1 comportant un cockpit 2, appelé aussi poste de pilotage, dans une pointe avant 4. Le cockpit 2 comporte une planche 6 de bord (on considère pour simplifier que le pylône central fait partie de la planche de bord) et au moins un siège 8 réglable pour permettre à un pilote et/ou un copilote de régler son siège pour accéder aux commandes 9 de pilotage se trouvant sur la planche 6 et voir de façon appropriée l'environnement extérieur. Dans la forme de réalisation illustrée sur la figure 2, deux sièges 8 désignés respectivement par les références 8A, 8B sont prévus dans le cockpit. Seule une commande 9 de pilotage est représentée sur la planche 6 de bord pour simplifier le dessin, ici sous la forme d'un bouton à presser.

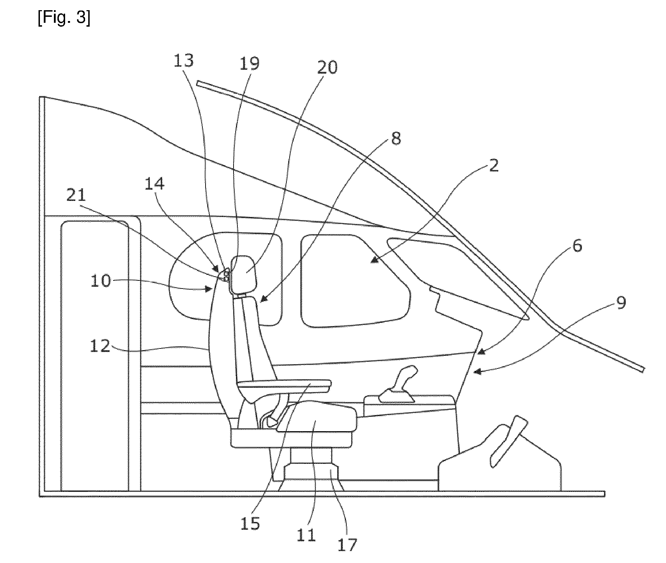

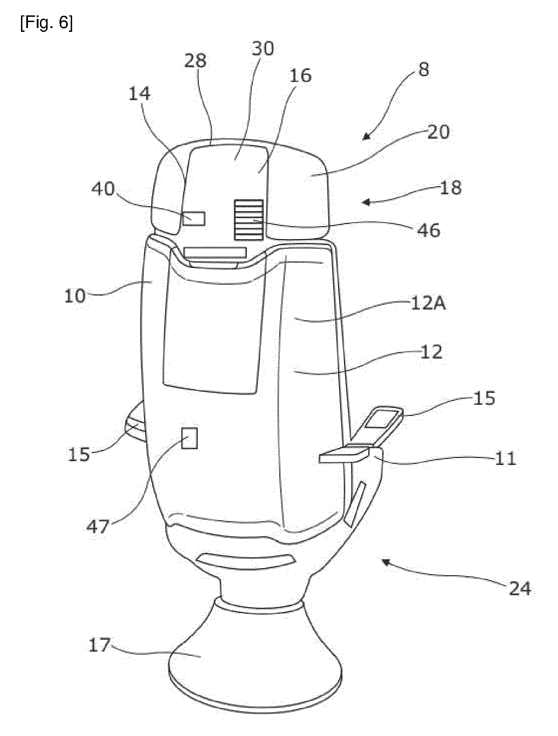

Le siège 8 de cockpit (dans la forme de réalisation illustrée sur la figure 2, les sièges 8A et 8B) comprend de manière classique un dossier 10 et une assise 11. Le dossier selon certaines formes de réalisation comprend un appui-tête 20 : l'appui-tête 20 est considéré comme faisant partie intégrante du dossier. Le siège comporte également des accoudoirs 15 et un pied de support 17. Comme représenté sur les figures 3 à 6, le dossier 10 du siège 8 intègre au niveau de sa face arrière 12 extérieure un équipement 14. L'équipement 14 se présente sous la forme d'un dispositif électronique 13 comportant au moins un processeur 19 de traitement de données et au moins une zone 21 de stockage de données sous forme par exemple de mémoire électronique. Le dispositif électronique 13 ne sera pas décrit plus en détail car de type connu. L'équipement 14 comprend également une zone 16 d'affichage. La zone 16 d'affichage peut être par cristaux liquides, à plasma, à diodes électroluminescentes (appelés LED, Light Emiting Diode en langue anglosaxonne) ou autres. La zone d'affichage doit être disposée à un niveau tel que lorsque le pilote entre dans le cockpit 2, l'affichage est clairement visible pour le pilote. Ainsi dans les formes de réalisation illustrées, la zone 16 d'affichage est disposée au niveau de la partie supérieure 18 du dossier 10. La partie supérieure est considérée comme étant la partie se trouvant verticalement au-dessus des accoudoirs 15. Dans les formes de réalisation des figures 3 à 6, la zone 16 d'affichage est située au niveau de l'appui-tête 20 et peut s'étendre légèrement en dessous comme dans la forme de réalisation de la figure 6. Dans la forme de réalisation des figures 3 à 6, le siège 8 comprend une coque 22 additionnelle : la face arrière 12 du siège comprend alors une face arrière 12A de la coque 22. La coque 22 s'étend depuis la partie basse 24 du siège (la partie basse correspondant à la partie se trouvant en dessous des accoudoirs) jusqu'à l'appui-tête 20 et dans la forme illustrée, plus précisément, au niveau de la partie médiane 26 de l'appui-tête 20. La partie médiane 26 de l'appui-tête correspond à une bande centrale s'étendant sur 80% de la hauteur de l'appui-tête. La hauteur est prise dans la direction verticale lorsque l'aéronef repose sur le sol.

L'équipement 14 comprend des commandes 28 pour contrôler des paramètres de confort, appelées commandes 28 de confort. Les commandes 28 de confort permettent de régler des paramètres de confort permettant d'améliorer, d'adapter l'environnement aux souhaits des personnes occupant le cockpit comme le pilote, le copilote, l'ingénieur navigant. Les paramètres de confort désignent tout paramètre de l'environnement de pilotage, tel que le réglage du siège (hauteur, profondeur, inclinaison, positionnement de l'appui-tête, du pied du siège si rendu possible par la configuration ...), la luminosité de l'éclairage dans le cockpit, l'affichage d'informations différentes liées au pilotage telles que des informations d'accueil pour les membres du cockpit. Certains paramètres sont propres à certaines phases de vol. Lorsque les entrants accèdent à l'intérieur du cockpit, les paramètres accessibles sont ceux permettant d'adapter l'environnement de pilotage pour le démarrage d'un vol. Une fois en vol, des informations à destination des pilotes peuvent être affichées comme le positionnement des hôtesses dans l'aéronef. Les commandes 28 de confort se trouvent à distance des commandes 9 de pilotage et bien distinctes. Le pilote sait qu'en manipulant l'équipement 14, il n'agira que sur les paramètres de confort et ne sera pas susceptible d'interférer sur le pilotage ce qui renforce la sécurité dans la manipulation des commandes confort. Dans le cas d'un pilote se trouvant aux commandes 9 de pilotage et d'un copilote aux commandes 28 de confort, il ne pourra pas y avoir de commandes contradictoires. L'un d'eux peut modifier les paramètres de confort pendant que l'autre assure le pilotage. L'un d'eux peut même adapter un paramètre de confort comme la position du siège de l'autre pour qu'il se concentre sur le pilotage. Il est également possible que le pilote et le copilote assurent le pilotage et que parallèlement un membre de l'équipage vienne régler les paramètres de confort. La mise en place des commandes 28 de confort sur le siège 8 cockpit à distance des commandes 9 de pilotage permet de les ségréger physiquement : les commandes 9 de pilotage sont physiquement accessibles depuis la planche 6 de bord et les commandes 28 de confort sont physiquement accessibles depuis l'équipement 14. Lorsque le pilote entre dans le cockpit 2, il n'a pas besoin de s'asseoir sur son siège 8 pour accéder aux commandes 28 de confort. Une fois dans le cockpit, il a un accès direct et rapide à l'équipement 14. Par ailleurs, il peut effectuer le réglage debout ce qui rend la programmation des paramètres plus agréable. A peine introduit dans le cockpit, il peut ainsi régler les paramètres de confort de son habitacle de pilotage.

Dans les formes de réalisation illustrées, l'équipement 14 comporte un écran 30 tactile susceptible de présenter une partie ou l'ensemble de la zone 16 d'affichage. Ainsi certaines commandes 28 voire l'ensemble de celles-ci sont des zones de l'écran 30 sur lesquelles un appui déclenche une action qui peut être de type varié : l'action peut être la commande directe d'un composant comme la commande de la hauteur du siège. Elle peut être aussi par exemple la demande de saisie de données permettant de régler le paramètre de confort en question avant de passer à la commande proprement dite. Des commandes peuvent aussi se présenter sous forme de bouton poussoir ou toute autre forme.

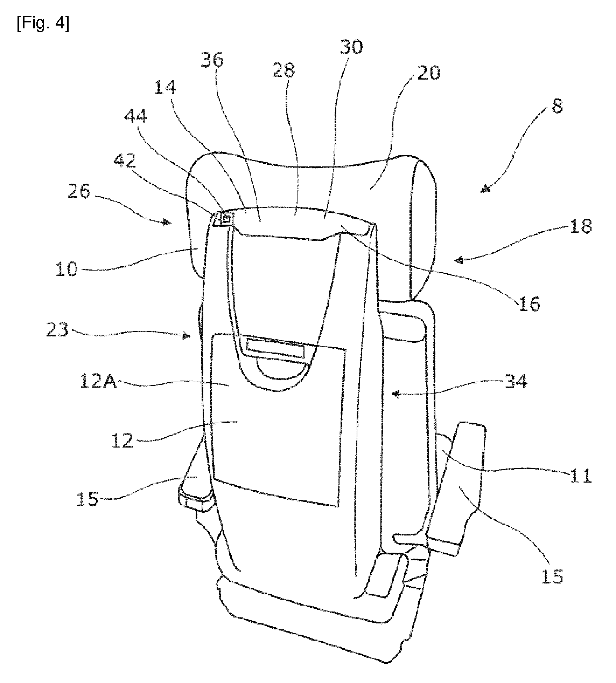

L'équipement 14 peut se présenter sous de nombreuses formes. Dans les formes illustrées sur les figures 4 à 6, l'équipement est intégré à la partie supérieure 23 de la coque 22. Comme pour le dossier, la partie supérieure 23 de la coque 22 est considérée comme étant la partie de la coque se trouvant au-dessus des accoudoirs 15.

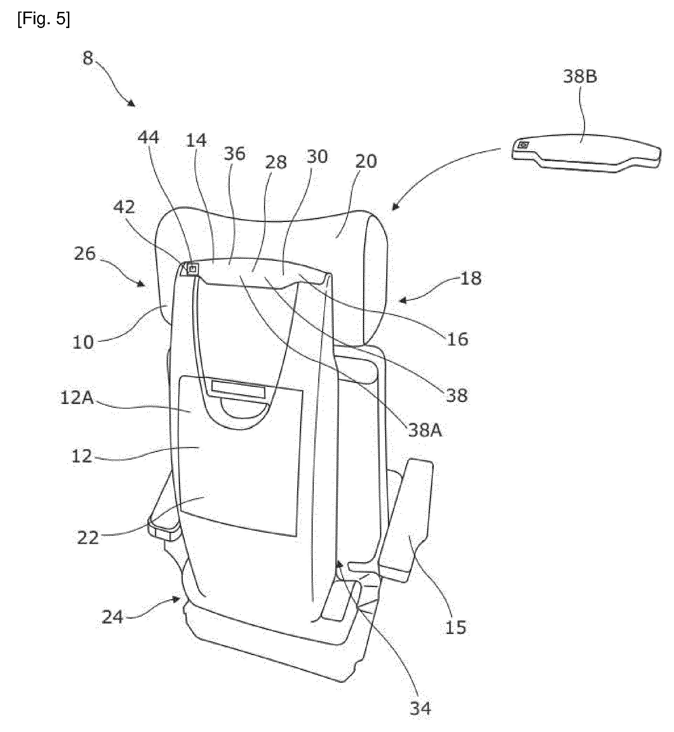

Selon la forme de réalisation illustrée sur les figures 4 et 5, la coque 22 comporte la face 12A arrière extérieure visible en entrant dans le cockpit et une face 34 opposée à celle-ci. La coque 22 présente une face 36 supérieure faisant le lien entre la face 12A arrière et 34 avant de la coque et constituant ainsi le bord supérieur périphérique de la coque 22. La face 36 supérieure est inclinée par rapport à l'horizontale de manière à être visible pour toute personne s'introduisant dans le cockpit 2. L'avion reposant au sol, un plan horizontal est considéré comme un plan parallèle au sol. L'équipement 14 est intégré à la coque 22 au niveau de la face 36 supérieure formant une unité avec celui-ci à savoir au moins une partie du bord supérieur de la dite coque. Selon une alternative de réalisation, l'équipement 14 pourrait être intégré en deçà du bord supérieur au niveau d'un ressaut permettant d'offrir une face inclinée visible depuis l'entrée du cockpit. Selon un autre mode de réalisation illustré sur la figure 5, l'équipement 14 peut se présenter sous la forme d'un dispositif 38 électronique comprenant une partie 38A solidaire du dossier et une partie 38B indépendante amovible de manière à former une unité avec la coque lorsqu'associée à la partie 38A et à se dissocier aisément de celle-ci par tout type de moyen connu. La partie 38B comprend un processeur 19 de traitement de données et une zone de stockage 21 de données. Ainsi le dispositif 38 et plus précisément la partie 38B amovible peut être préprogrammée au sol avant d'entrer dans l'aéronef et lorsque le pilote ou toute autre personne l'associe par exemple par clipsage à la coque et plus précisément à la partie 38A, les paramètres de confort sont automatiquement réglés aux valeurs préprogrammées. Le dispositif 38 est ensuite utilisé de la même façon qu'un équipement 14 intégré. Toute autre forme de réalisation de l'équipement 14 peut prévoir de la même façon une partie fixe 38A et une partie amovible 38B.

Dans la forme de réalisation de la figure 6, l'équipement 14 est intégré à l'appui-tête 20 au niveau de la face 12 arrière du dossier du siège. La face 12 inclut donc la face arrière de l'appui-tête. L'écran 30 tactile de l'équipement 14 s'étend sur plus de la moitié de la hauteur de l'appui-tête voire la hauteur totale de celui-ci ou quasiment. Cela permet d'avoir une surface importante d'interaction pour un affichage plus convivial.

L'équipement 14 est intégré à au moins l'un des sièges 8A, 8B du cockpit voire à l'ensemble de ceux-ci. Ainsi il peut n'y avoir qu'un seul équipement 14 à partir duquel tous les paramètres de confort sont réglables ou un équipement 14 sur le siège 8A du pilote et un équipement 14 sur le siège 8B du copilote à partir desquels peuvent être réglés les mêmes paramètres et éventuellement des paramètres différents propres au siège 8A, 8B sur lequel est intégré respectivement l'équipement 14A, 14B correspondant par exemple. Par ailleurs, dans les avions d'essai par exemple, il existe un siège complémentaire pour l'ingénieur naviguant à l'arrière des deux sièges pilote et copilote. Sa fonction et son positionnement étant différent, il peut être pratique d'allouer un équipement 14 par siège pour que chaque membre de l'équipe dans le cockpit puisse régler indépendamment les paramètres de confort le concernant.

Dans certaines formes de réalisation comme celle de la figure 6, l'équipement 14 peut comprendre des moyens 40 de reconnaissance de la personne qui le manipule. Ces moyens de type connu peuvent être des capteurs biométriques permettant de relever une empreinte de doigt et/ou un iris et/ou un visage et/ou une voix et/ou tout autre caractéristique physique. Les moyens de reconnaissance peuvent être utilisés de multiples façons comme pour assurer le déverrouillage de l'équipement ou encore pour appeler des paramètres de confort correspondant au profil de l'utilisateur identifié et régler l'environnement en conséquence.

La possibilité de régler des paramètres de confort au niveau du dos du siège n'interdit pas de disposer de commandes 28 de confort additionnelles ailleurs. Ainsi des commandes de réglage du siège peuvent être également prévues sur l'accoudoir du siège ou autres zones de celui-ci ou encore sur une paroi du cockpit.

L'équipement 14 est connecté de manière filaire ou sans fil à un module de traitement des paramètres de confort lui-même lié à au moins un composant réglable de l'environnement du pilote et/ou directement (ou indirectement) à au moins un desdits composants. Cet aspect ne sera pas décrit plus en détail car les systèmes utilisés pour associer un réglage de composant à partir d'une commande 28 de confort sont de type connu.

Le démarrage de l'équipement 14 est contrôlé depuis une commande 42 sous la forme par exemple d'un bouton 44 sur le bord de l'écran. Alternativement, il peut être assuré de manière automatique par un événement tel que l'ouverture de la porte d'entrée dans le cockpit ou la reconnaissance d'un pilote qu'elle soit biométrique par un capteur adapté ou faciale par des caméras ou autres avant d'accéder au cockpit.

L'entrant peut régler les paramètres de confort manuellement ou activer un profil de réglage personnalisé (et par exemple automatiquement à l'aide des moyens 40 de reconnaissance comme expliqué plus haut).

L'équipement 14 peut être programmé pour assurer un affichage d'informations à l'entrée du pilote et/ou du copilote et/ou d'un ou plusieurs autres membres de l'équipe du cockpit. La zone 16 d'affichage peut présenter des visuels de bienvenue, des informations à destination des entrants telles que des prévisions météo, des informations sur l'aéronef ou encore des informations importantes et spécifiques que la compagnie souhaite rappeler au pilote et/ou autre(s) personne(s) précitée(s). Ces informations peuvent être identiques sur toute une flotte ou encore personnalisées et/ou propres à l'aéronef et/ou aux entrants. L'équipement 14 peut être pourvu de moyens 46 audio (figure 6) tel qu'un haut-parleur pour passer de la musique ou accueillir de manière personnalisée et orale les entrants. L'équipement 14 peut éclairer le cockpit 2 d'une certaine façon par exemple en affichant sur la zone 16 d'affichage des formes et/ou couleurs spécifiques comme des couleurs de la compagnie ou du fabricant, des dessins ou des images comme un logo par exemple celui de la compagnie ou du fabricant, le nom et/ou la photo de l'entrant (pilote, copilote ...). Ce peut être une combinaison de certains de ces éléments et/ou d'autres non cités voire l'ensemble. Dans le cas de vol de nuit, les éléments affichés à l'aide de l'équipement 14 peuvent assurer un éclairage temporaire, complémentaire ou alternatif. Les moyens 40 de reconnaissance décrits plus haut permettent d'identifier la personne qui manipule l'équipement et de choisir une programmation d'actions telle que décrites précédemment (éclairage, affichage d'informations, ...). La reconnaissance de l'entrant comme vu plus haut peut également déclencher le déverrouillage de l'équipement 14. Suivant la langue natale de l'entrant ainsi identifiée, les informations sont diffusées dans une langue adaptée.

La forme de l'équipement 14 est adaptée aux contours du siège de manière à ne pas perdre de place et conserver l'esthétique de celui-ci voire l'améliorer.

Une partie de la surface du siège 8 peut être couvert de moyens photoélectriques de type connu pour assurer l'alimentation de l'équipement 14 dont une cellule 47 photoélectrique est représentée à des fins de simplification sur la figure 6.

## Revendications

1. Siège (8) de cockpit comprenant un dossier (10) présentant une face (12) arrière et une assise (11), **caractérisé en ce que** le dossier présente un équipement (14) intégré à la face arrière (12) du dossier et comportant au moins une commande (28) de paramètre de confort et une zone (16) d'affichage.

2. Siège selon la revendication 1, **caractérisé en ce que** l'équipement (14) comprend une partie (38B) amovible comportant au moins une partie desdites commandes (28), au moins un processeur (19) et au moins une zone de stockage (21).

3. Siège selon l'une des revendications 1 ou 2, **caractérisé en ce que** l'équipement (14) comprend un écran (30) tactile, des commandes (28) étant actionnées par simple appui sur ledit écran.

4. Siège selon l'une des revendications 1 à 3, **caractérisé en ce que** le dossier (10) comprend un appui-tête (20) et l'équipement (14) est intégré à l'appui-tête au moins en partie.

5. Siège selon l'une des revendications 1 à 3, **caractérisé en ce que** le dossier (10) comprend une coque (22), la face arrière (12) du dossier correspondant alors à la face (12A) arrière de la coque, et l'équipement (14) étant intégré à la partie supérieure de ladite coque sur une face (36) inclinée par rapport à l'horizontale.

6. Cockpit muni d'un siège selon l'une des revendications 1 à 5, **caractérisé en ce qu'**il comprend une planche de bord (6) comportant des commandes (9) de pilotage ségréguées de commandes (28) de confort accessibles depuis l'équipement (14) intégré à la face arrière (12) d'au moins un siège de cockpit.

7. Procédé de contrôle de paramètres de confort d'un cockpit (2), **caractérisé en ce qu'**au moins une partie du contrôle est réalisée à partir de commandes (28) de confort d'un équipement (14) intégré à une face (12) arrière d'au moins un siège (8) dudit cockpit (2), l'équipement comportant une zone (16) d'affichage.

8. Procédé selon la revendication 7 **caractérisé en ce qu'**il comprend le contrôle de la zone (16) d'affichage pour assurer un éclairage temporaire, alternatif ou complémentaire du cockpit.

9. Procédé selon l'une des revendications 7 ou 8, **caractérisé en ce que** certaines commandes (28) de confort sont accessibles depuis l'équipement (14) ainsi qu'à distance de celui-ci dans le cockpit en dehors de la planche (6) de bord.

10. Procédé selon l'une des revendications 7 à 9, **caractérisé en ce que** l'équipement (14) active des commandes (28) de confort associées à des paramètres de contrôle déterminés suivant l'utilisateur identifié par des moyens de reconnaissance (40) de l'équipement.

## Patentansprüche

1. Cockpitsitz (8) umfassend eine Rücklehne (10) mit einer Rückseite (12) und einer Sitzfläche (11), **dadurch gekennzeichnet, dass** die Rücklehne eine Ausrüstung (14) aufweist, die in die Rückseite (12) der Rücklehne integriert ist und wenigstens eine Komforteinstellungssteuerung (28) und einen Anzeigebereich (16) beinhaltet.

2. Sitz nach Anspruch 1, **dadurch gekennzeichnet, dass** die Ausrüstung (14) einen abnehmbaren Abschnitt (38B) umfasst, der wenigstens einen Abschnitt der Steuerungen (28), wenigstens einen Prozessor (19) und wenigstens einen Speicherungsbereich (21) beinhaltet.

3. Sitz nach einem der Ansprüche 1 oder 2, **dadurch gekennzeichnet, dass** die Ausrüstung (14) einen Berührungsbildschirm (30) umfasst, wobei Steuerungen (28) durch einfaches Drücken auf den Bildschirm betätigt werden.

4. Sitz nach einem der Ansprüche 1 bis 3, **dadurch gekennzeichnet, dass** die Rücklehne (10) eine Kopfstütze (20) umfasst und die Ausrüstung (14) wenigstens teilweise in die Kopfstütze integriert ist.

5. Sitz nach einem der Ansprüche 1 bis 3, **dadurch gekennzeichnet, dass** die Rücklehne (10) eine Hülle (22) umfasst, wobei die Rückseite (12) der Rücklehne dann der Rückseite (12A) der Hülle entspricht und die Ausrüstung (14) auf einer Fläche (36), die im Verhältnis zur Horizontalen geneigt ist, in den oberen Abschnitt der Hülle integriert ist.

6. Cockpit, das mit einem Sitz nach einem der Ansprüche 1 bis 5 versehen ist, **dadurch gekennzeichnet, dass** es eine Instrumententafel (6) umfasst, die Flugsteuerungen (9) beinhaltet, die von Komfortsteuerungen (28) getrennt sind, die von der Ausrüstung (14) aus zugänglich sind, die in die Rückseite (12) wenigstens eines Cockpitsitzes integriert ist.

7. Verfahren zur Steuerung von Komforteinstellungen eines Cockpits (2), **dadurch gekennzeichnet, dass** wenigstens ein Teil der Steuerung anhand von Komfortsteuerungen (28) einer Ausrüstung (14), die in eine Rückseite (12) wenigstens eines Sitzes (8) des Cockpits (2) integriert ist, durchgeführt wird, wobei die Ausrüstung einen Anzeigebereich (16) beinhaltet.

8. Verfahren nach Anspruch 7, **dadurch gekennzeichnet, dass** es das Steuern des Anzeigebereichs (16) zur Sicherstellung einer temporären, abwechselnden oder ergänzenden Beleuchtung des Cockpits umfasst.

9. Verfahren nach einem der Ansprüche 7 oder 8, **dadurch gekennzeichnet, dass** bestimmte Komfortsteuerungen (28) sowohl von der Ausrüstung (14) als auch von dieser entfernt im Cockpit außerhalb der Instrumententafel (6) zugänglich sind.

10. Verfahren nach einem der Ansprüche 7 bis 9, **dadurch gekennzeichnet, dass** die Ausrüstung (14) Komfortsteuerungen (28) aktiviert, die Steuerungsparametern zugeordnet sind, die je nach dem Benutzer bestimmt werden, der durch Erkennungsmittel (40) der Ausrüstung erkannt wird.

## Claims

1. Cockpit seat (8) comprising a seat back (10) having a rear face (12) and a cushion (11), **characterized in that** the seat back has equipment (14) integrated into the rear face (12) of the seat back and having at least one comfort parameter control (28) and a display zone (16) .

2. Seat according to Claim 1, **characterized in that** the equipment (14) comprises a removable part (38B) having at least some of said controls (28), at least one processor (19) and at least one storage zone (21).

3. Seat according to either one of Claims 1 and 2, **characterized in that** the equipment (14) comprises a touchscreen (30), controls (28) being actuated by simply pressing on said screen.

4. Seat according to one of Claims 1 to 3, **characterized in that** the seat back (10) comprises a headrest (20), and the equipment (14) is integrated into the headrest at least in part.

5. Seat according to one of Claims 1 to 3, **characterized in that** the seat back (10) comprises a shell (22), the rear face (12) of the seat back then corresponding to the rear face (12A) of the shell, and the equipment (14) being integrated into the upper part of said shell on a face (36) that is inclined with respect to the horizontal.

6. Cockpit provided with a seat according to one of Claims 1 to 5, **characterized in that** it comprises an instrument panel (6) having piloting controls (9) segregated from comfort controls (28) accessible from the equipment (14) integrated into the rear face (12) of at least one cockpit seat.

7. Method for controlling comfort parameters of a cockpit (2), **characterized in that** at least part of the control is carried out using comfort controls (28) belonging to equipment (14) integrated into a rear face (12) of at least one seat (8) of said cockpit (2), the equipment having a display zone (16).

8. Method according to Claim 7, **characterized in that** it comprises controlling the display zone (16) to provide temporary, alternative or complementary lighting of the cockpit.

9. Method according to either of Claims 7 and 8, **characterized in that** certain comfort controls (28) are accessible from the equipment (14) and also at a distance therefrom in the cockpit outside the instrument panel (6) .

10. Method according to one of Claims 7 to 9, **characterized in that** the equipment (14) activates comfort controls (28) associated with control parameters determined according to the user identified by recognition means (40) of the equipment.
